# EUROPEAN PATENT APPLICATION

(11) **EP 3 719 725 A1**
(43) Date of publication of application: **07.10.2020**
(21) Application number: 19020255.6
(22) Date of filing: 04.04.2019
(51) Int. Cl.: G06Q 10/08, G06Q 50/30

(54) **SYSTEM AND METHOD FOR MONITORING LOCATIONS OF A PLURALITY OF TRANSPORTABLE ARTICLES**

(71) Applicant: Linde GmbH, 82049 Pullach (DE)
(72) Inventor: Lenz, Stefan, 85221 Dachau (DE); Pojsl, Annika, 85435 Erding (DE)

(57) **Abstract**

System for monitoring locations of a plurality of transportable articles within a defined space, comprising:
at least one vehicle (100) adapted to load and unload the transportable articles (50, 60) and to transport the articles (50, 60) within the defined space (610),
an identification device (110) provided on the at least one vehicle (100) adapted to identify the articles (50, 60) and generate article identification information,
a tracking system (140) adapted to ascertain the position of the vehicle (100) within the defined space (610) to generate vehicle position information,
a sensor device (160) adapted to ascertain loading onto and unloading off the vehicle (100) of articles (50, 60) to generate article loading/unloading information, a communication system (150) adapted to transmit article identification information, vehicle position information and article loading/unloading information to a processing device (200) adapted to generate an overview file comprising information relating to locations and identities of the plurality of transportable articles within the defined space based on the article identification information, the vehicle position information and the article loading/unloading information.

## Description

### Field of the invention

The invention relates to a system and a method for monitoring locations of a plurality of transportable articles within a defined space.

For numerous applications it is important to have real-time knowledge of the location of articles. For example, in the context of gas cylinder logistics, as in connection with filling and/or storage of gas cylinders, the location of individual cylinders and/or pallets used for their transport and storage in stockyards and/or filling plants or stations is essential. Simplifying the acquisition of such real time knowledge would make stock management more efficient.

Prior art solutions typically require tracking devices, such as RFID- or Bluetooth-devices, on the respective articles, such as for example gas cylinders. Real-time knowledge of the location of such articles, e.g. cylinders, is then for example obtained via triangulation means based on infrastructure provided within the stockyard. This requires high investment costs. Especially, present day gas cylinders must be retrofitted with such tracking devices, which leads to relatively high costs and effort.

The present invention seeks to minimize the installation and handling costs in connection with providing an effective system for monitoring locations of transportable articles within a defined space.

### Summary of the invention

According to the invention, there is provided a system including the features of claim 1 and a method including the features of claim 9.

There is provided a system for monitoring locations of a plurality of transportable articles within a defined space, comprising:
at least one vehicle adapted to load and unload the transportable articles and to transport the articles within the defined space, an identification device provided on the at least one vehicle adapted to identify the articles to generate article identification information, a tracking system adapted to ascertain the position of the vehicle within the defined space to generate vehicle position information, a sensor device adapted to ascertain loading onto and unloading off the vehicle of articles to generate article loading/unloading information, a communication system adapted to transmit article identification information, vehicle position information and article loading/unloading information to a processing device adapted to generate an overview file comprising information relating to locations and identities of the plurality of transportable articles within the defined space based on the article identification information, the vehicle position information and the article loading/unloading information. Ascertaining the position of the vehicle especially can comprise tracking the position of the vehicle in a continuous manner.

There is further provided a method for monitoring locations of a plurality of transportable articles within a defined space, comprising the following steps: transporting the articles within the defined space by means of at least one vehicle adapted to load and unload the articles, identifying the articles transported by means of the at least one vehicle by means of an identification device provided on the vehicle to generate article identification information, ascertaining the position of the at least one vehicle within the defined space to generate vehicle position information by means of a tracking system, ascertaining positions at which articles are loaded onto and unloaded off the at least one vehicle to generate article loading/unloading information by means of a sensor device provided on the vehicle, transmitting article identification information, vehicle position information and article loading/unloading information by means of a communication system to a processing device adapted to generate an overview file comprising information relating to locations and identities of the plurality of transportable articles within the defined space based on the article identification information, the vehicle position information and the article loading/unloading information.

The invention provides low cost monitoring of locations and identities of transportable articles. No hardware installations on the individual articles or within the defined space, i.e. the space within which the location of articles is to be monitored, are necessary. According to the invention, it is sufficient to provide a number of components of the system on the vehicles for transporting, loading and unloading the articles within the defined space.

The processing of information thus obtained can be effected in a central location, such as a processing device in an office space within or in the vicinity of the defined space. The system is reliable as it makes use exclusively of electronic devices. Maintenance issues are minimized due to absence of any mechanical parts in connection with monitoring the locations and identities of transportable articles.

Advantageously, a system according to the invention comprises one, two, three or more transportation vehicles, depending on the size of the defined area and/or the amount and frequency of articles to be handled.

Further advantageous embodiments are the subject matter of the dependent claims.

Advantageously, the system comprises a display device adapted to display information included in the overview file. Such a display device can, for example, display a real-time map of the defined space indicating the individual locations of transportable articles, especially the information relating to location and identities of the articles in an easily readable graphic layout.

According to a preferred embodiment, the at least one vehicle is a forklift truck, by means of which articles can be loaded, transported and unloaded in an effective and reliable manner. Advantageously, an identification device can be mounted for example in the upper regions of a mast or a crosshead of such a forklift truck. It is also possible, for example, to provide such an identification device on an overhead guard, if provided.

Advantageously, the transportable articles comprise pallets for the transport of gas cylinders and/or gas cylinders. Gas cylinders or pallets for their transport are typically provided with barcodes, which are easily readable by suitable identification devices provided on a forklift truck.

Advantageously, the identification device comprises a camera based scanning device provided on the vehicle. Such camera based scanning devices are expediently positioned in the upper regions of a forklift truck, such as the mast, crosshead or overhead guard, as previously mentioned.

Expediently, the tracking system comprises a GPS-based tracking system and/or a radar based tracking system and/or a camera based tracking system. Such tracking systems are reliable in ascertaining the position of vehicles such as forklift trucks in a continuous manner.

Advantageously, the sensor device for ascertaining loading and/or unloading of articles comprises an accelerometer and/or a pressure sensor.. Obviously, other types of sensors as well as other positions for such sensors are feasible. The sensor device can also be provided as a barometric sensor, a forklevel switch or an optically based sensor. In case of the sensor device being provided as a pressure sensor, it is advatantageously positioned on the fork such that the weight of a transportable article such as a pallet or a gas cylinder acts upon it in case of transportation. If the sensor is provided as an accelerometer or barometric sensor, it can be provided on the fork or mast or an adjacent part moving upwards or downswards with the fork. In case the sensor is provided as a forklevel switch, which is advantageously provided on the mast or an adjacent part, this switch is triggered when the fork is moved below or above a certain height. In case of usage of optically based sensors, these can be positioned anywhere on the forklift truck with a line of sight to the loaded article to the transported, for example pallet or gas cylinder. In this case, loading and/or unloading can be identified as the relative horizontal motion of the transportable article with respect to the forklift truck.

Advantageously, a combination of some or all of the above mentioned sensors can be used to reliably and uniquely identify loading and/or unloading of a transportable article.

Advantageously, the communication system for communication between the devices provided on the vehicle and a central processing device comprises a WiFi- or an LTE-connectivity system. Any other suitable wireless communication system may be utilised.Advantageously, processing of information is effected at a central location. It is also possible to provide such a processing device on a vehicle. In this case, for example, processing is performed on one vehicle and the overview file thus generated is shared with other vehicles. A central location provided with a processing device is not necessary in this case.

The invention will now further be discussed taking into account the appended figures. Herein,
Figure 1 shows a forklift truck adapted to the used with an advantageous embodiment of the present invention, and
Figure 2 shows an example of a real-time map of a defined space, within which articles to be monitored can be transported, which map can be generated according to the present invention.

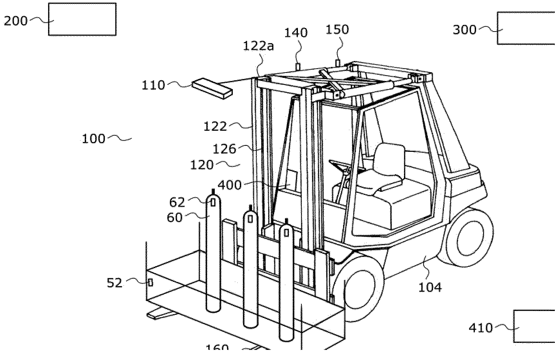

In Figure 1, a forklift truck is generally designated 100. It is provided with a frame 104, in which a seat for a user and a driving wheel as well as controls are provided. The forklift truck 100 is provided with a forklift mechanism 120 comprising a vertically extending mast 122 along which a fork 124 is moveable in upward and downward direction. In Figure 1, fork 124 is shown in a lower position. Typically, fork 124 is moved along mast 122 by means of a lifting chain 126.

Forklift truck 100 is provided with a camera based scanning device 110 located at an upper end 122a of mast 122. Scanning device 110 is adapted to identify articles loaded onto fork 124 to be transported within a defined space by the forklift truck 100.
Scanning device 100 can be provided to be pivotable about one or more axes, in order to be able to effectively scan sufficiently large areas on the forklift truck, in which articles to be transported can be positioned.

The fork 124 is especially useful in transporting pallets 50 for carrying gas cylinders 60. Advantageously, the pallet 50 and/or the gas cylinders 60 are provided with barcodes 52, 62 or other identification means which can easily be identified by scanning device 110. The identification of a pallet 50 or gas cylinders 60 can be performed during loading, during transport or during unloading.

Forklift truck 100 is provided with a tracking device 140, which is advantageously provided as a GPS - receiver. It is also possible to provide the tracking device 140 as a camera-based or radar-based device. Tracking device 140 is adapted to identify and monitor the position of forklift truck 100, especially within a defined space, as will be further discussed below.

Forklift truck 100 is further provided with sensor devices 160 adapted to ascertain loading and unloading of articles such as pallets 50 or gas cylinders 60 onto fork 124. Expediently, such sensor devices are provided as pressure sensors within or on the fork 124. They can also be provided as accelerometers or as barometric sensors]. They can also be provided as fork level switches or optically based sensors.

Information pertaining to the identification of transported articles (article identification information collected by scanning device 110) and to positions, at which sensors 160 detect loading or unloading of articles (article loading/unloading position information) is transmitted to a processing device 200, which is typically provided remotely from forklift truck 100. In order to transmit this information, forklift truck 100 is provided with a transmission or connectivity device 150 (for example a Wifi- or an LTE-system), which is adapted to transmit signals from forklift truck 100 to processing device 200 in a wireless manner. Processing device 200 thus receives article identification information, vehicle position information and article loading/unloading position information, and is adapted to create a map file comprising the positions and identification data of all articles, especially pallets 50 or gas cylinders 60, i.e., in the language of the claims information relating to the locations and identities of the plurality of transportable articles within the defined space. Advantageously, the map file is continuously updated taking into account movement of forklift truck 100 as well as of further forklift trucks included in the system as well as respective loading/unloading operations. Hereby, a real-time map file is generated.

Forklift truck 100 is further provided with a display device 400, on which such a real-time map file can be received and displayed. A user of forklift truck 100 can thus be provided with a real-time overview of the positions of all articles and of further forklift trucks within an area of interest (defined space). Such display devices 400 are advantageously provided on all forklift trucks of a system as well as at least at one central control point, for example an office.

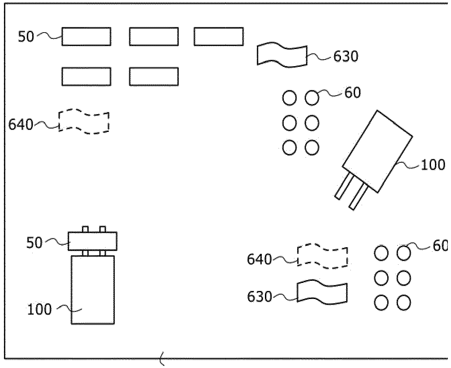

The invention will now be further explained with reference to Figure 2. Figure 2 shows a preferred embodiment of a real-time map, which is displayed for example on display device 400 on a forklift truck, or in a central location, such as an office.

The real-time map is generally designated 600. It constitutes a map of a defined space 610, such as a stock yard for storing gas cylinders. The real-time map can, for example, display the current location of forklift trucks 100 as well as of pallets 50 or individual gas cylinders 60 within the defined space. It is also possible to display pallets currently being transported by a forklift truck. In case a forklift truck 100 loads a pallet 50 or a gas cylinder 60 and transports it to a position outside of the defined space 610, display of the corresponding pallet 50 or gas cylinder 60 will be discontinued within defined space 610. It is possible that display of such a pallet or gas cylinder is then continued within a map of a further defined space, adjacent to defined space 610. A display device 400 may be adapted to automatically switch or manually be switched between maps of different defined spaces. Correspondingly, in case a forklift truck 100 transports a pallet 50 or a number of gas cylinders from a position outside of the defined space into the defined space 610, corresponding indications will be shown in the real-time map 600 of defined space 610. It is possible to display information relating to the identities of the pallets 50 and gas cylinders 60. This information can be automatically displayed at all times, as indicated by information fields 630, or only upon request of a user, as indicated by information fields 640 shown in dashed lines.
- 50: pallet
- 52: barcode
- 60: gas cylinder
- 62: barcode
- 100: forklift truck
- 104: frame
- 110: scanning device
- 120: forklift mechanism
- 122: mast
- 122a: upper end of mast
- 124: fork
- 126: lifting chain
- 140: tracking device
- 150: connectivity device
- 160: sensor devices
- 200: processing device
- 400: display device
- 600: real-time map
- 610: defined space (stock yard)
- 630: information fields
- 640: information fields

## Claims

1. System for monitoring locations of a plurality of transportable articles within a defined space, comprising:
- at least one vehicle (100) adapted to load and unload the transportable articles (50, 60) and to transport the articles (50, 60) within the defined space (610),
- an identification device (110) provided on the at least one vehicle (100) adapted to identify the articles (50, 60) and generate article identification information,
- a tracking system (140) adapted to ascertain the position of the vehicle (100) within the defined space (610) to generate vehicle position information,
- a sensor device (160) adapted to ascertain loading onto and unloading off the vehicle (100) of articles (50, 60) to generate article loading/unloading information,
- a communication system (150) adapted to transmit article identification information, vehicle position information and article loading/unloading information to a processing device (200) adapted to generate an overview file comprising information relating to locations and identities of the plurality of transportable articles within the defined space based on the article identification information, the vehicle position information and the article loading/unloading information.

2. System according to claim 1, further comprising a display device (400) adapted to display information included in the overview file.

3. System according to claim 1 or claim 2, wherein the at least one vehicle (100) is a forklift truck.

4. System according to any one of the preceding claims, wherein the transportable articles (50, 60) comprise pallets (50) for transport of gas cylinders (60) and/or gas cylinders (60).

5. System according to any one of the preceding claims, wherein the identification device (110) comprises a camera based scanning device provided on the vehicle (100).

6. System according to any one of the preceding claims, wherein the tracking system (200) comprises a GPS tracking system and/or a radar based tracking system and/or a camera based tracking system.

7. System according to any one of the preceding claims, wherein the sensor device (160) comprises an accelerometer and/or a pressure sensor (barometric device).

8. System according to any one of the preceding claims, wherein the communication system (150) comprises a Wifi- or an LTE-based connectivity adapted for communication between the at least one vehicle (100) and the processing device (200).

9. Method for monitoring locations of a plurality of transportable articles within a defined space, comprising the following steps:
- transporting the articles (50, 60) within the defined space (610) by means of at least one vehicle (100) adapted to load and unload the articles (50, 60)
- identifying the articles transported by means of the at least one vehicle (100) by means of an identification device (110) to generate article identification information,
- ascertaining the position of the at least one vehicle (100) within the defined space (610) to generate vehicle position information by means of a tracking system (140)
- ascertaining positions at which articles (50, 60) are loaded onto and unloaded off the at least one vehicle (100) to generate article loading/unloading information by means of a sensor device (160), and
- transmitting article identification information, vehicle position information and article loading/unloading information by means of a communication system (150) to a processing device (200) adapted to generate an overview file comprising information relating to locations and identities of the plurality of transportable articles within the defined space based on the article identification information, the vehicle position information and the article loading/unloading information.
